# EUROPÄISCHE PATENTSCHRIFT

(11) **EP 1 395 471 B1**
(45) Veröffentlichungstag und Bekanntmachung des Hinweises auf die Patenterteilung: **19.04.2006**
(21) Anmeldenummer: 02750778.9
(22) Anmeldetag: 04.06.2002
(51) Int. Cl.: B60S 1/38

(54) **HALTER FÜR DIE WISCHLIPPE EINES SCHEIBENWISCHERS**
HOLDER FOR THE WIPER LIP OF A WINDSHIELD WIPER
SUPPORT POUR LEVRE D'ESSUIE-GLACE

(30) Priorität: 15.06.2001 DE 10129773
(43) Veröffentlichungstag der Anmeldung: 10.03.2004
(73) Patentinhaber: Uphus, Dr., Reinhard, 30419 Hannover (DE)
(72) Erfinder: UPHUS, Reinhard, 30419 Hannover (DE)
(74) Vertreter: Meissner, Peter E.
(86) Internationale Anmeldenummer: PCT/DE2002/002081
(87) Internationale Veröffentlichungsnummer: WO 2002/102633

(56) Entgegenhaltungen:
- WO-A-00/48876
- DE-A- 2 549 326
- DE-A- 10 007 809
- GB-A- 2 202 134
- US-A- 3 099 031

## Beschreibung

Die Erfindung betrifft einen Halter für die Wischlippe eines Scheibenwischers sowie ein Verfahren zur Herstellung des Halters.

Unter dem Begriff Scheibenwischer wird hier die Vorrichtung verstanden, mit der die Vorder oder Rückscheibe eines Fahrzeuges oder auch die Verglasung eines Scheinwerfers bei Automobilen gereinigt werden kann.
Diese Scheibenwischer bestehen aus einem Halter - in der Regel aus Metall - der der Scheibe zugekehrt die eigentliche Wischlippe aufnimmt- Da die Scheiben von Fahrzeug zu Fahrzeug unterschiedliche Wölbungen aufweisen und bei der Schwenkbewegung über die Scheibe darüber hinaus auch die Wölbung der Scheibe unterschiedlich ist, muss sich die Wischlippe diesen Formen angleichen, damit ein ständiger Kontakt zur Scheibe besteht. Damit der aus Gummi bestehenden flexiblen Wischlippe auch eine ausreichende Seitensteifigkeit gegeben wird, ist diese in einer Metallschiene angeordnet. Bewegt wird der Scheibenwischer durch einen mit seinem einen Ende auf eine Abtriebswelle eines Motors oder Getriebes aufgesteckten Arm. Das andere Ende dieses Armes ist mit einer Hebetanordnung verbunden, die die Kraft der mittigen Anlenkung durch den Arm auf die verhältnismäßig lange Metallschiene mit der Wischlippe verteilt, so dass diese relativ gleichmäßig an mehreren Punkten auf die Scheibe gedrückt werden kann.

Diese Gesamtkonstruktion eines Scheibenwischers ist relativ aufwendig und hat den großen Nachteil, dass beim Auswechseln des Scheibenwischers, wenn die Wischlippe unbrauchbar geworden ist, im Allgemeinen die gesamte Hebel-und Gelenkmechanik bis zur Befestigung an dem freien Ende des Armes, mit entsorgt werden muss.

Ein Halter im Sinne des Oberbegriffs des Patentanspruchs 1 bzw. ein Verfahren zur Herstellung des Halters ist aus der DE-A-2549326 bekannt.

Der Erfindung liegt daher die Aufgabe zugrunde, eine völlig abweichende Scheibenwischerkonstruktion zu schaffen, die in der Herstellung des Halters wesentlich geringere. Kosten verursacht und auch von der Entsorgung her, umweltfreundlicher ist.

Gelöst wird diese Aufgabe erfindungsgemäß bei einem Halter für die Wischlippe eines Scheibenwischer, der gelenkig mit einem Arm und über diesen mit der Abtriebswelle eines Getriebes oder Motors verbunden ist,
wobei der Halter aus einem extrudierten elastischen Material besteht, an dessen einer Längsseite eine Nut zur Aufnahme der Wischlippe vorgesehen ist, an der gegenüberliegenden Längsseite - auf seine Längserstreckung bezogen mittig - der Halter am Arm gelenkig befestigt ist, in das elastische Material ein parallel zur Nut verlaufender, elastischer Streifen eingebracht ist, dadurch,dass an dem oder innerhalb des elastischen Material, parallel zur Nut verlaufend, ein die Steifigkeit des Halters erhöhendes Profil eingebracht ist und dass der Streifen eine Vorspannung aufweist und dass dessen Abstand von der Nut geringer ist als der Abstand von dem die Seitensteifigkeit erhöhenden Profil.

Das elastische Material des Halters kann Gummi oder TPE sein.

Das Profil kann aus Metall oder Kunststoff bestehen, vorzugsweise aus Polypropylen.

Der die Vorspannung aufweisende Streifen kann aus Gummi oder TPE bestehen.

Bei dieser erfindungsgemäßen Lösung wird auf jegliche Hebelmechanik verzichtet, d.h. der Halter selbst ist direkt mit dem einen Ende des Armes verbunden. Der gleichmäßige Andruck des Halters und damit der daran befindlichen Wischlippe, wird durch das Haltermaterial bzw. dessen Eigenschaften aufgebracht. Hierzu wird dem Halter bei dessen Herstellung eine Vorspannung vorgegeben, die ihn in einer leicht gewölbten Position hält, wobei diese Wölbung - wie auch bei den bekannten mechanischen Scheibenwischerkonstruktionen - bei Nichtauflage auf einer Scheibe größer ist als die Wölbung einer Scheibe. Hierdurch wird erreicht, dass die Wischlippe auch an ihren Enden noch einen ausreichenden Anlagedruck hat.

Das Verfahren zur Herstellung des Halters für die Wischlippe eines Scheibenwischers, besteht darin, dass der gelenkig mit einem Arm und über diesen mit der Antriebswelle eines Getriebes oder Motors verbunden ist, wobei der Halter aus einem extrudierten elastischen Material besteht, an dessen einer Längsseite eine Nut zur Aufnahme der Wischlippe vorgesehen ist, wobei
in den Spritzkopf eines Extruders ein elastisch vorvulkanisierter Streifen aus elastischem Material kontinuierlich eingeführt, dort mit einer elastischen Masse umhüllt und anschließend als Strang extrudiert wird, wobei gleichzeitig beim Extrudieren entlang einer Längsseite eine Nut zur Aufnahme der Wischlippe eingeformt wird und die Zuführung des vorgedehnten Streifens außermittig so erfolgt, dass der Abstand dieses Streifens von der die Nut enthaltenden Längsseite des Stranges geringer ist als von der gegenüberliegenden Längsseite des Stranges,
das Extrudat anschließend ggf. vulkanisiert wird, wobei beim Extrudieren und Vulkanisieren die Vorspannung im Streifen aufrechterhalten wird,
und anschließend der Strang quergeteilt wird, wobei die Länge der einzelnen Strangteile der gewünschten Länge des Halters entsprich, wobei der Streifen vorgedehnt ist und an dem oder innerhalb des elastischen Material, parallel zur Nut verlaufend, ein die Seitensteifigkeit des Halters erhöhendes Profil eingebracht ist, wobei der Abstand des Streifens von der Nut geringer ist als der Abstand des Streifens von dem die Seitensteifigkeit erhöhenden Profit.

Die aufwendige Montage, wie bei herkömmlichen Scheibenwischern, entfällt vollkommen. Schließlich ergibt sich noch ein erheblicher Produktionsvorteil dadurch, dass nicht für unterschiedliche Scheibenwischer (je nach Fahrzeugtyp sind andere Abmessungen erforderlich) unterschiedliche Hebelmechanikkonstruktionen und Abmessungen hergestellt bzw. auf Lager gehalten werden müssen. Vom durch Extrudieren hergestellten Strang lassen sich die gewünschten Längen beliebig abtrennen.

Gegenüber herkömmlichen Scheibenwischerkonstruktionen, insbesondere deren Haltern, weisen die erfindungsgemäßen Halter auch ein viel geringeres Gewicht auf.

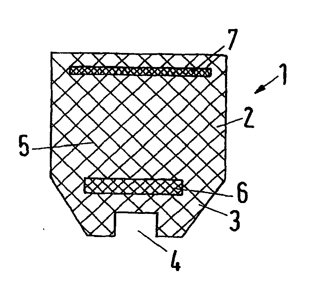

In der Zeichnung ist der Aufbau des erfindungsgemäßen Halters vereinfacht dargestellt, wobei es sich um einen Querschnitt durch den Halter 1 handelt. Dieser weist im Querschnitt gesehen einen rechteckigen oberen Teil 2 und einen konisch zulaufenden unteren Teil 3 auf. In eine Nut 4 an der unteren Längsseite ist die nicht dargestellt Wischlippe einsetzbar. In das elastische Material 5 des Halters 1 ist im unteren Teil 3, also in geringeren Abstand zur Längsseite mit der Nut 4 verglichen mit dem Abstand zur oberen Längsseite ein in Produktionsrichtung vorgedehnter elastischer Streifen 6 angeordnet, der die notwendige Vorspannung auf den Halter ausübt, ihn also gekrümmt oder gewölbt hält. Die Seitensteifigkeit (Querstabilität) wird durch ein eingelagertes oder an der oberen Längsseite angelagertes Profil 7 erzielt, das aus Kunststoff oder Metall bestehen kann.

Das elastische Material des Halters kann beispielsweise Gummi sein, wobei dann eine Vulkanisation notwendig ist. Eine weitere Möglichkeit ist die Verwendung eines Thermoplastischen Elastomer (TPE) für den Halter und ein gedehnter Strang ebenfalls aus TPE. Für das die Seitensteifigkeit erhöhende Profil kann beispielsweise ein Streifen aus Polypropylen verwendet werden. Der Vorteil bei der Herstellung eines derartigen Halters ist, dass hierbei keine Vulkanisation notwendig ist und das schließlich die spätere Entsorgung sehr einfach ist, weil nur thermoplastisch zu verarbeitende Materialen eingesetzt worden sind.

## Patentansprüche

1. Halter für die Wischlippe eines Scheibenwischer, der gelenkig mit einem Arm und über diesen mit der Abtriebswelle eines Getriebes oder Motors verbunden ist,
wobei der Halter (1) aus einem extrudierten elastischen Material besteht, an dessen einer Längsseite eine Nut (4) zur Aufnahme der Wischlippe vorgesehen ist, an der gegenüberliegenden Längsseite - auf seine Längserstreckung bezogen mittig - der Halter am Arm gelenkig befestigt ist, in das elastische Material ein parallel zur Nut (4) verlaufender, elastischer Streifen (6) eingebracht ist,
**dadurch gekennzeichnet,**
**dass** an dem oder innerhalb des elastischen Material, parallel zur Nut (4) verlaufend, ein die Steifigkeit des Halters (1) erhöhendes Profil (7) eingebracht ist und dass der Streifen (6) eine Vorspannung aufweist und dass dessen Abstand von der Nut (4) geringer ist als der Abstand von dem die Seiten steifigkeit erhöhenden Profil (7).

2. Halter nach Anspruch 1,
**dadurch gekennzeichnet,**
**dass** das elastische Material des Halters (1) Gummi oder TPE ist.

3. Halter nach einem der vorstehenden Ansprüche,
**dadurch gekennzeichnet,**
**dass** das Profil (7) aus Metall oder Kunststoff besteht.

4. Halter nach Anspruch 3,
**dadurch gekennzeichnet,**
**dass** das Profil (7) aus Polypropylen besteht.

5. Halter nach einem der vorstehenden Ansprüche,
**dadurch gekennzeichnet,**
**dass** der die Vorspannung aufweisende Streifen (6) aus Gummi oder TPE besteht.

6. Verfahren zur Herstellung einen Halters für die Wischlippe eines Scheibenwischers, der gelenkig mit einem Arm und über diesen mit der Antriebswelle eines Getriebes oder Motors verbunden ist, wobei der Halter aus einem extrudierten elastischen Material besteht, an dessen einer Längsseite eine Nut zur Aufnahme der Wischlippe vorgesehen ist, wobei in den Spritzkopf eines Extruders ein elastisch vorvulkanisierter Streifen aus elastischem Material kontinuierlich eingeführt, dort mit einer elastischen Masse umhüllt und anschließend als Strang extrudiert wird, wobei gleichzeitig beim Extrudieren entlang einer Längsseite eine Nut zur Aufnahme der Wischlippe eingeformt wird und die Zuführung des vorgedehnten Streifens außermittig so erfolgt, dass der Abstand dieses Streifens von der die Nut enthaltenden Längsseite des Stranges geringer ist als von der gegenüberliegenden Längsseite des Stranges,
das Extrudat anschließend ggf. vulkanisiert wird, wobei beim Extrudieren und Vulkanisieren die Vorspannung im Streifen aufrechterhalten wird,
und anschließend der Strang quergeteilt wird, wobei die Länge der einzelnen Strangteile der gewünschten Länge des Halters entspricht, **dadurch gekennzeichnet, daß** der Streifen vorgedehnt ist und an dem oder innerhalb des elastischen Material, parallel zur Nut verlaufend, ein die Seitensteifigkeit des Halters erhöhendes Profil eingebracht ist, wobei der Abstand des Streifens von der Nut geringer ist als der Abstand des Streifens von dem die Seiten steifigkeit erhöhenden Profil.

7. Verfahren nach Anspruch 6,
**dadurch gekennzeichnet,**
**dass** das die Steifigkeit des Halters erhöhende Profil als Thermoplastschmelze hinein extrudiert wird.

## Claims

1. A holder for the wiper lip of a windscreen wiper, which is articulated to an arm and, via the latter, to the output shaft of a gear mechanism or motor,
the holder (1) being made from an extruded elastic material, along one long side of which a groove (4) is provided for holding the wiper lip, on the opposing long side - centrally relative to its longitudinal extent - the holder is articulated to the arm, and an elastic strip (6) extending parallel to the groove (4) is introduced into the elastic material,
**characterised in that**
a profiled member (7) which increases the rigidity of the holder (1) is introduced onto or into the elastic material, extending parallel to the groove (4), and that the strip (6) has an initial tension and that the distance thereof from the groove (4) is less than the distance from the profiled member (7) which increases the lateral rigidity.

2. A holder according to Claim 1, **characterised in that** the elastic material of the holder (1) is rubber or TPE.

3. A holder according to one of the preceding claims, **characterised in that** the profiled member (7) is made of metal or plastics material.

4. A holder according to Claim 3, **characterised in that** the profiled member (7) is made of polypropylene.

5. A holder according to one of the preceding claims, **characterised in that** the strip (6) which has the initial tension is made of rubber or TPE.

6. A method for producing a holder for the wiper lip of a windscreen wiper, which is articulated to an arm and, via the latter, to the drive shaft [sic] of a gear mechanism or motor, the holder being made from an extruded elastic material, along one long side of which a groove is provided for holding the wiper lip, wherein an elastically pre-vulcanised strip of elastic material is continuously introduced into the extrusion head of an extruder, is surrounded therein with an elastic compound and then is extruded as a strand, with a groove for holding the wiper lip being formed therein simultaneously during the extrusion along one long side and the supply of the pre-expanded strip takes place eccentrically such that the distance of this strip from the long side of the strand which contains the groove is less than from the opposing long side of the strand,
the extrudate is then optionally vulcanised, with the initial tension in the strip being maintained during the extrusion and vulcanisation,
and subsequently the strand is divided transversely, the length of the individual strand parts corresponding to the desired length of the holder, **characterised in that** the strip is pre-expanded and a profiled member which increases the lateral rigidity of the holder is introduced onto or into the elastic material, extending parallel to the groove, the distance of the strip from the groove being less than the distance of the strip from the profiled member which increases the lateral rigidity.

7. A method according to Claim 6, **characterised in that** the profiled member which increases the rigidity of the holder is extruded in as a thermoplastic melt.

## Revendications

1. Support pour la lèvre d'essuyage d'un essuie-glace, lequel est relié de manière articulée à un bras et, par le biais de celui-ci, à l'arbre de sortie d'un mécanisme ou d'un moteur, le support (1) consistant en une pièce de matière élastique extrudée sur un côté longitudinal de laquelle il est prévu une rainure (4) destinée à recevoir la lèvre d'essuyage et sur le côté longitudinal opposé de laquelle -au centre, rapporté à son étendue longitudinale- le support est fixé de manière articulée au bras, une bande (6) élastique parallèle à la rainure (4) étant placée dans la matière élastique,
**caractérisé en ce qu'**un profilé (7) augmentant la rigidité du support (1) est mis en place sur la matière élastique ou à l'intérieur de celle-ci, parallèlement à la rainure (4), **en ce que** la bande (6) présente une précontrainte et **en ce que** sa distance par rapport à la rainure (4) est inférieure à sa distance par rapport au profilé (7) augmentant la rigidité latérale.

2. Support selon la revendication 1,
**caractérisé en ce que** la matière élastique du support (1) est du caoutchouc ou du TPE.

3. Support selon l'une des revendications précédentes,
**caractérisé en ce que** le profilé (7) est en métal ou en matière plastique.

4. Support selon la revendication 3,
**caractérisé en ce que** le profilé (7) est en polypropylène.

5. Support selon l'une des revendications précédentes,
**caractérisé en ce que** la bande (6) présentant la précontrainte est en caoutchouc ou en TPE.

6. Procédé de fabrication d'un support pour la lèvre d'essuyage d'un essuie-glace, lequel est relié de manière articulée à un bras et, par le biais de celui-ci, à l'arbre de sortie d'un mécanisme ou d'un moteur, le support consistant en une pièce de matière élastique extrudée sur un côté longitudinal de laquelle il est prévu une rainure destinée à recevoir la lèvre d'essuyage, une bande prévulcanisée en matière élastique étant introduite en continu dans la tête d'injection d'une extrudeuse, y étant enveloppée d'une masse élastique et extrudée ensuite sous forme de barre, une rainure destinée à recevoir la lèvre d'essuyage étant formée en même temps lors de l'extrusion le long d'un côté longitudinal et l'amenée de la bande pré-étirée ayant lieu de manière excentrée, de telle façon que la distance de cette bande par rapport au côté longitudinal de la barre comportant la rainure est inférieure à sa distance par rapport au côté longitudinal opposé de la barre, l'extrudat étant ensuite vulcanisé le cas échéant, la précontrainte dans la bande étant maintenue lors de l'extrusion et de la vulcanisation, et la barre étant ensuite séparée dans le sens transversal, la longueur des différentes parties de barre correspondant à la longueur souhaitée du support,
**caractérisé en ce que** la bande est pré-étirée et qu'un profilé augmentant la rigidité latérale du support est mis en place sur la matière élastique ou à l'intérieur de celle-ci, parallèlement à la rainure, la distance de la bande par rapport à la rainure étant inférieure à la distance de la bande par rapport au profilé augmentant la rigidité latérale.

7. Procédé selon la revendication 6,
**caractérisé en ce que** le profilé augmentant la rigidité du support est incorporé par extrusion sous forme d'une masse fondue de matière thermoplastique.
